(19) Europäisches Patentamt / European Patent Office / Office européen des brevets

(11) **EP 3 009 531 B2**

(12) **NOUVEAU FASCICULE DE BREVET EUROPEEN**
Après la procédure d'opposition

(45) Date de publication et mention de la décision concernant l'opposition:
**15.10.2025   Bulletin 2025/42**

(45) Mention de la délivrance du brevet:
**13.07.2022   Bulletin 2022/28**

(21) Numéro de dépôt: 15189434.2

(22) Date de dépôt: **12.10.2015**

(51) Classification Internationale des Brevets (IPC):
**C25B 15/027** *(2021.01)*     **C25B 9/70** *(2021.01)*
**C25B 1/04** *(2021.01)*

(52) Classification Coopérative des Brevets (CPC):
**C25B 1/04; C25B 9/70; C25B 15/027;** Y02E 10/76;
Y02E 60/36; Y02E 60/50

(54) **PROCÉDÉ DE PILOTAGE D'UN SYSTÈME D'ÉLECTROLYSE PRENANT EN COMPTE LA TEMPÉRATURE DES MODULES ÉLECTROLYSEURS DUDIT SYSTÈME D'ÉLECTROLYSE**

VERFAHREN ZUM STEUERN EINES ELEKTROLYSESYSTEMS UNTER BERÜCKSICHTIGUNG DER TEMPERATUR DER ELEKTROLYSEANLAGENMODULE BESAGTEN ELEKTROLYSESYSTEMS

METHOD FOR CONTROLLING AN ELECTROLYSIS SYSTEM TAKING INTO ACCOUNT THE TEMPERATURE OF THE ELECTROLYSIS MODULES OF SAID ELECTROLYSIS SYSTEM

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité:  13.10.2014  FR 1459781

(43) Date de publication de la demande:
**20.04.2016   Bulletin 2016/16**

(73) Titulaire: **Commissariat à l'Energie Atomique et aux Energies Alternatives**
**75015 Paris (FR)**

(72) Inventeurs:
• **LOPEZ, Mathias**
**81600 GAILLAC (FR)**
• **BOURASSEAU, Cyril**
**38000 GRENOBLE (FR)**

(74) Mandataire: **Novaimo**
**Europa 1**
**362, avenue Marie Curie**
**Archamps Technopole**
**74166 Saint-Julien-en-Genevois Cedex (FR)**

(56) Documents cités:
CA-C- 2 370 026        FR-A1- 2 927 907
FR-A1- 2 960 559       FR-A1- 2 960 560
US-A1- 2008 047 502    US-A1- 2010 259 102
US-A1- 2012 175 954    US-A1- 2013 093 194
US-A1- 2013 168 236    US-B2- 6 912 450

• S.K. MAZLOOMI ET AL.: "Influencing factors of water electrolysis electrical efficiency", RENEWABLE AND SUSTAINABLE ENERGY REVIEWS, vol. 16, no. 6, 2012, pages 4257 - 4263, XP028496853, ISSN: 1364-0321, Retrieved from the Internet <URL:https://doi.org/10.1016/i.rser.2012.03.05 2> DOI: 10.1016/j.rser.2012.03.052
• STOJIC, D.L.  MARCETA, M.P.  SOVILJ, S.P. MILJANIC, S.V.S.: "Hydrogen generation from water electrolysis-possibilities of energy saving", JOURNAL OF POWER SOURCES, vol. 118, no. 1-2, 25 May 2003 (2003-05-25), AMSTERDAM, NL, pages 315 - 319, XP004425697, ISSN: 0378-7753, DOI: 10.1016/ S0378-7753(03)00077-6

## Description

### Domaine technique de l'invention

L'invention concerne le domaine de la gestion de l'énergie.

L'invention a pour objet plus particulièrement un procédé de pilotage d'un système d'électrolyse.

### État de la technique

L'évolution des besoins en énergie et la tendance au développement durable a permis l'essor de nombreuses techniques d'utilisation de sources d'énergie renouvelable.

Une source d'énergie renouvelable peut être une énergie solaire, une énergie éolienne ou hydraulique.

Il existe de nombreux dispositifs capables d'interagir avec une source d'énergie renouvelable de sorte à transformer au moins une partie de l'énergie associée en énergie électrique. C'est par exemple le cas avec les panneaux photovoltaïques qui interagissent avec l'énergie solaire, les éoliennes qui interagissent avec le vent ou encore les hydroliennes qui interagissent avec l'eau.

Cette énergie électrique, issue des dispositifs donnés à titre d'exemple ci-dessus, peut être injectée dans un réseau électrique.

Le fonctionnement d'un réseau électrique nécessite à tout instant d'égaler la production à la consommation. La consommation est en grande partie estimée à l'avance et la production pilotée en fonction de cette consommation estimée.

Il en résulte donc une problématique liée au fait que, par définition, la production d'électricité à partir d'une source d'énergie renouvelable est imprévisible du fait de son intermittence.

En ce sens il existe un besoin de répondre à la problématique d'interaction d'une source d'énergie renouvelable avec un réseau électrique lorsque l'on souhaite injecter de l'énergie issue de ladite source d'énergie renouvelable dans ledit réseau électrique.

Ce besoin a notamment été satisfait par des solutions du type de celle décrite dans le document WO2010/048706. Ce document décrit un procédé dans lequel l'énergie électrique issue de panneaux photovoltaïques est stockée sous la forme d'hydrogène grâce à un électrolyseur relié auxdits panneaux. Ainsi, l'hydrogène stocké peut ensuite être déstocké pour faire fonctionner une pile à combustible reliée au réseau électrique selon les besoins en consommation dudit réseau électrique. Ce document propose une stratégie permettant d'adapter le fonctionnement de modules électrolyseurs en fonction de leurs températures. Il est connu que le rendement d'un module électrolyseur est d'autant meilleur que sa température est élevée, en ce sens, la stratégie adoptée est de choisir le point de fonctionnement optimum des modules électrolyseurs en fonction de leurs températures pour répartir le courant électrique issu des panneaux photovoltaïques.

Cette stratégie ne propose pas une optimisation suffisante de la génération d'hydrogène.

### Objet de l'invention

Le but de la présente invention est de proposer une solution améliorant le fonctionnement d'un système d'électrolyse, notamment tout en permettant d'augmenter le rendement de production en sortie du système d'électrolyse.

On tend vers ce but grâce à un procédé de pilotage d'un système d'électrolyse comprenant une pluralité de modules électrolyseurs qui sont tous fonctionnels, c'est-à-dire aptes à passer dans un état actif, et destiné à coopérer avec un système d'alimentation en énergie électrique exploitant une source d'énergie intermittente, ledit procédé comprenant:

- une étape de détermination d'une puissance électrique disponible que peut fournir ledit système d'alimentation en énergie électrique,
- une étape d'évaluation d'un nombre $N_e$ adapté de modules électrolyseurs à utiliser en fonction de la puissance électrique disponible déterminée,
- une étape de choix de modules électrolyseurs à alimenter électriquement parmi les modules électrolyseurs fonctionnels de la pluralité de modules électrolyseurs du système d'électrolyse prenant en compte ledit nombre évalué Ne, ledit nombre évalué Ne étant strictement inférieur au nombre total de modules électrolyseurs fonctionnels du système d'électrolyse,
- une étape de détermination de la température de chacun des modules électrolyseurs choisis,
- une étape d'alimentation électrique des modules électrolyseurs choisis par ledit système d'alimentation en énergie électrique selon une répartition de la puissance électrique disponible déterminée dépendante des températures déterminées de chacun des modules électrolyseurs choisis.

Chaque module électrolyseur est configuré de sorte à adopter un état actif lorsqu'il est alimenté par ledit système d'alimentation en énergie électrique ou un état inactif lorsqu'il n'est pas alimenté par ledit système d'alimentation en énergie électrique, ladite étape de choix des modules électrolyseurs comprend une étape de détermination d'un nombre courant de modules électrolyseurs actifs. L'étape de choix (E3) des modules électrolyseurs (2) comporte une étape de détermination de températures d'au moins une partie des modules électrolyseurs (2).

Selon un mode d'exécution, ledit nombre courant déterminé de modules électrolyseurs actifs étant égal audit nombre évalué $N_e$, alors l'étape de choix consiste à choisir tous les modules électrolyseurs actifs.

Selon un mode d'exécution de ladite réalisation, le nombre courant déterminé de modules électrolyseurs actifs étant supérieur au nombre évalué $N_e$, lesdites températures déterminées au cours de ladite étape de choix sont celles des modules électrolyseurs actifs et les modules électrolyseurs choisis par ladite étape de choix correspondent aux $N_e$ modules électrolyseurs actifs dont les températures sont les plus élevées, et en ce que l'étape d'alimentation électrique desdits modules électrolyseurs choisis consiste à alimenter électriquement uniquement lesdits modules électrolyseurs choisis.

Selon un autre mode d'exécution de ladite réalisation, le nombre courant déterminé de modules électrolyseurs actifs étant inférieur au nombre évalué $N_e$, lesdites températures déterminées au cours de ladite étape de choix sont celles des modules électrolyseurs inactifs et les modules électrolyseurs choisis par ladite étape de choix correspondent aux modules électrolyseurs actifs plus au moins un module électrolyseur inactif dont la température déterminée au cours de ladite étape de choix est la plus élevée, et en ce que l'étape d'alimentation électrique desdits modules électrolyseurs choisis consiste à alimenter électriquement uniquement lesdits modules électrolyseurs choisis.

De préférence, l'étape d'évaluation dudit nombre adapté $N_e$ de modules électrolyseurs à utiliser est calculé à partir de l'équation suivante : $NB_{ENTIER}\left(\frac{Pdisp}{Pmax\_module}\right) + 1$ avec $P_{disp}$ la puissance électrique disponible déterminée, $P_{max\_module}$ la puissance maximum que peut recevoir chaque module électrolyseur, et $NB_{ENTIER}$ la fonction donnant une valeur entière du rapport $\frac{Pdisp}{Pmax\_module}$.

Le procédé peut comporter une étape de détermination de ladite répartition de la puissance disponible déterminée comportant, pour chaque module électrolyseur choisi :

- une étape de détermination d'un coefficient optimisé théorique de répartition de la puissance disponible déterminée prenant en compte la température mesurée dudit module électrolyseur choisi,

- une étape de détermination d'un coefficient réel de répartition à utiliser pour ledit module électrolyseur choisi prenant en compte ledit coefficient optimisé théorique correspondant,

ladite étape de détermination de ladite répartition comportant en outre une étape d'ajustement desdits coefficients réels, notamment dans laquelle l'écart entre chaque coefficient optimisé théorique et le coefficient réel correspondant est minimisé.

Notamment, la minimisation de l'écart entre chaque coefficient théorique optimisé et le coefficient réel correspondant peut tenir compte des contraintes suivantes :

- la somme des coefficients réels desdits modules électrolyseurs choisis est égale à 1,

- pour chaque module électrolyseur choisi le coefficient réel correspondant est inférieur ou égal à la puissance maximale dudit module électrolyseur choisi divisée par la puissance disponible déterminée,

- pour chaque module électrolyseur choisi le coefficient réel correspondant est supérieur ou égal à une puissance minimale dudit module électrolyseur choisi divisée par le nombre évalué Ne.

L'invention est relative à une installation de stockage d'énergie sous la forme d'un produit contenant de l'hydrogène comprenant :

- un système d'alimentation en énergie électrique configuré de sorte à exploiter une source d'énergie intermittente,

- un système d'électrolyse comprenant une pluralité de modules électrolyseurs et configuré de sorte à coopérer avec ledit système d'alimentation en énergie électrique,

- un module de pilotage de l'installation comportant les éléments matériels et logiciels de mise en œuvre du procédé de pilotage tel que décrit.

## Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :

- la figure 1 est une vue schématique des composants utilisés dans le cadre de la mise en œuvre du procédé selon un mode d'exécution de l'invention,
- la figure 2 représente différentes étapes du procédé de pilotage selon un mode d'exécution particulier de l'invention,
- la figure 3 illustre plus en détails l'étape de choix des modules électrolyseurs de la figure 2,
- la figure 4 illustre une mise en œuvre particulière de l'étape d'alimentation électrique de la figure 2,
- la figure 5 illustre un exemple de l'évolution du coefficient théorique optimisé de répartition de l'énergie en fonction de la température du module électrolyseur.

## Description de modes préférentiels de l'invention

Le procédé décrit ci-après diffère notamment de l'art antérieur en ce qu'il va être choisi un certain nombre de modules électrolyseurs à alimenter électriquement, ce nombre de modules électrolyseurs à alimenter étant déterminé à partir de la puissance électrique disponible. Ceci permet de faire fonctionner un nombre limité de modules électrolyseurs tout en favorisant le rendement des modules électrolyseurs alimentés.

Selon une réalisation particulière, les températures de certains modules électrolyseurs seront déterminées, notamment par mesure, en vue de participer au choix desdits modules électrolyseurs à utiliser en fonction de la puissance électrique disponible.

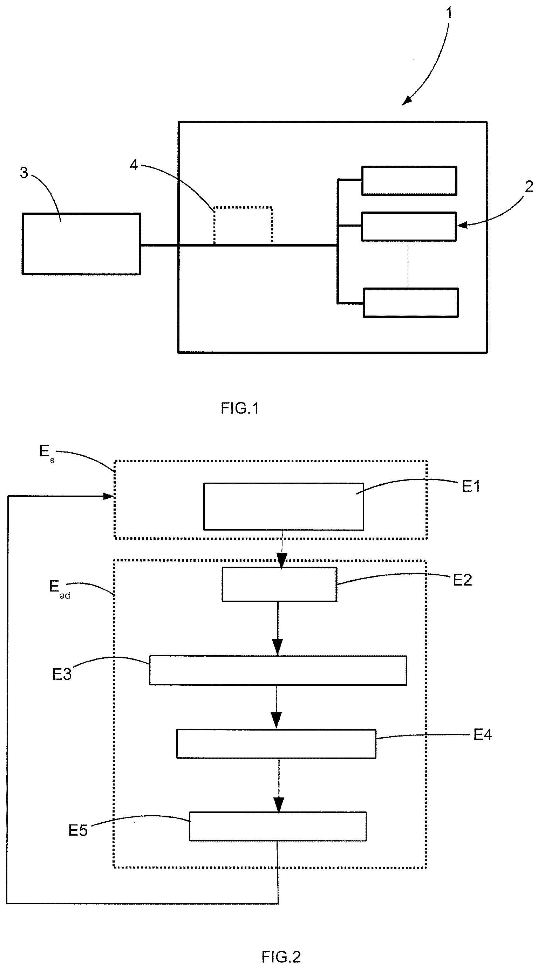

Comme illustré en figure 1, un système d'électrolyse 1 comprend une pluralité de modules électrolyseurs 2, et est destiné à coopérer avec un système d'alimentation en énergie électrique 3 exploitant une source d'énergie intermittente.

Dans la présente description, une source d'énergie intermittente peut être subie, dans ce cas la source d'énergie intermittente peut être une source d'énergie renouvelable comme l'éolien, le photovoltaïque, l'hydraulique, etc. Alternativement, la source d'énergie intermittente peut l'être du fait d'une alimentation électrique intermittente voulue pour des raisons techniques ou économiques.

Autrement dit, le système d'alimentation en énergie électrique 3 peut soit directement exploiter l'énergie issue de la source d'énergie intermittente si cette dernière est une source d'énergie électrique intermittente, soit exploiter la source d'énergie intermittente de telle sorte à générer de l'électricité, pour alimenter électriquement le système d'électrolyse 1.

De préférence, chaque module électrolyseur 2 permet, lorsqu'il est alimenté par le système d'alimentation en énergie électrique 3 de produire un produit stockable à base d'hydrogène, notamment à partir d'eau. L'électrolyse de l'eau est préférée car elle permet de limiter l'émission directe de gaz à effet de serre.

Dans le cadre de la présente invention, il peut être utilisé deux principales technologies d'électrolyse à basse température de l'eau à base de modules électrolyseurs alcalins ou de modules électrolyseurs PEM (acronyme signifiant que l'électrolyseur concerné comporte une membrane échangeuse de protons). Chacune de ces technologies présentent l'une envers l'autre des avantages/inconvénients en termes de coût d'investissement, de capacité maximum de production, de qualité de l'hydrogène produit et de flexibilité de fonctionnement.

Les modules électrolyseurs 2 du système d'électrolyse 1 sont aussi connus dans le domaine sous la dénomination « électrolyseur multi-stacks » ou « empilement de cellules ». Il s'agit d'un système d'électrolyse 1 composé de plusieurs empilements de cellules d'électrolyse (càd de plusieurs modules électrolyseurs) qui ont la possibilité de fonctionner indépendamment les uns des autres. Ceci permet d'ajouter de la flexibilité au système d'électrolyse qui possède alors une gamme de fonctionnement plus large.

L'augmentation du nombre de modules électrolyseurs permet entre autres pour les modules électrolyseurs PEM d'augmenter leur capacité maximale de production qui est généralement limitée, dans certaines applications actuelles, à quelques dizaines de normaux mètres cubes d'hydrogène par heure et par module d'électrolyse.

En outre, l'augmentation du nombre de modules électrolyseurs au sein d'un même système d'électrolyse permet de faciliter l'adaptation des fluctuations des profils énergétiques intermittents en répartissant l'énergie disponible sur plusieurs modules électrolyseurs.

L'utilisation d'une pluralité de modules électrolyseurs 2 permet aussi d'effectuer des opérations de maintenance sur un module électrolyseur 2 en particulier en le déconnectant du système d'électrolyse 1 tout en maintenant la production de l'ensemble du système d'électrolyse 1.

L'invention est notamment relative à un procédé de pilotage d'un système d'électrolyse 1 dont les modules électrolyseurs 2 sont destinés à coopérer avec le système d'alimentation 3 en énergie électrique exploitant la source d'énergie intermittente.

Comme illustré en figure 2, ce procédé comporte avantageusement une étape de détermination E1 d'une puissance électrique disponible Pdisp que peut fournir ledit système d'alimentation 3 en énergie électrique. Cette étape E1 permet, par exemple à un instant donné, de connaître la puissance électrique disponible en sortie du système d'alimentation 3 en énergie électrique en vue d'optimiser la production du système d'électrolyse 1 en prenant en compte cette puissance électrique disponible.

En ce sens, le procédé peut comporter une étape de suivi Es de l'évolution de la puissance électrique disponible permettant de déclencher une étape d'adaptation du fonctionnement du système d'électrolyse 1. Cette étape de suivi Es comporte alors l'étape E1 de détermination de la puissance électrique disponible, par exemple mise en œuvre à intervalles réguliers. Le déclenchement de l'étape d'adaptation peut par exemple être mis en œuvre lorsqu'entre deux itérations successives de l'étape de suivi Es la valeur de la puissance électrique disponible déterminée est différente, ou diffère d'un seuil de différence prédéterminé.

Le procédé comporte en outre une étape d'évaluation E2 d'un nombre $N_e$ adapté de modules électrolyseurs 2 à utiliser en fonction de la puissance électrique disponible déterminée $P_{disp}$, ainsi qu'une étape de choix E3 de modules électrolyseurs 2 à alimenter électriquement prenant en compte ledit nombre évalué $N_e$. On comprend ici que lorsque les modules électrolyseurs 2 auront été choisis, ils seront par la suite les seuls alimentés électriquement par le système d'alimentation 3 en énergie électrique de sorte à participer à la génération d'un produit stockable, comme un produit à base d'hydrogène.

Le nombre Ne adapté de modules électrolyseurs 2 correspond préférentiellement au nombre minimal de modules électrolyseurs 2 à faire fonctionner pour utiliser toute la puissance disponible $P_{disp}$.

Selon l'invention, les modules électrolyseurs 2 de la pluralité de modules électrolyseurs 2 sont tous fonctionnels, c'est-à-dire qu'ils sont aptes à passer dans un état actif.

Par ailleurs, le nombre Ne est préférentiellement strictement inférieur au nombre total de modules électrolyseurs 2 de la pluralité de modules électrolyseurs 2 et ce notamment quelle que soit la puissance disponible déterminée : dans ce cas le nombre total de modules électrolyseurs peut être déterminé à partir d'un dimensionnement particulier du système d'alimentation 3 en énergie électrique par exemple limité à une puissance maximale fonction dudit nombre total.

En particulier, l'étape d'évaluation E2 dudit nombre adapté $N_e$ de modules électrolyseurs 2 à utiliser est calculé à partir de l'équation suivante :
$$Ne = NB_{ENTIER}\left(\frac{Pdisp}{Pmax\_module}\right) + 1$$
avec $P_{disp}$ la puissance électrique disponible déterminée, $P_{max\_module}$ la puissance maximum que peut recevoir chaque module électrolyseur 2 (caractéristique connue du module électrolyseur), et $NB_{ENTIER}$ la fonction donnant une valeur entière du rapport $\frac{Pdisp}{Pmax\_module}$. En particulier, la valeur entière correspond à un arrondi entier inférieur.

Le procédé peut ensuite comporter une étape de détermination E4 de la température de chacun des modules électrolyseurs 2 choisis suivie d'une étape d'alimentation E5 électrique des modules électrolyseurs 2 choisis par ledit système d'alimentation 3 en énergie électrique selon une répartition de la puissance électrique disponible déterminée dépendante des températures déterminées de chacun des modules électrolyseurs 2 choisis.

En ce sens, le fonctionnement des modules électrolyseurs 2 choisis sera déterminé en fonction de leurs températures. Une telle stratégie basée sur l'utilisation des températures des modules électrolyseurs 2 choisis est avantageuse dans le sens où la production d'un module électrolyseur présente un rendement différent selon sa température courante de fonctionnement. En particulier, chaque module électrolyseur 2 présente une température de fonctionnement qui évolue au cours du temps en fonction de la chaleur générée par la réaction d'électrolyse (elle-même dépendante du point de fonctionnement ; c'est-à-dire de l'intensité électrique circulant au travers dudit module électrolyseur 2), des pertes thermique avec l'environnement et d'un éventuel système de refroidissement qui s'active si une température maximale de fonctionnement est atteinte afin d'éviter une montée en température dudit module électrolyseur 2 pouvant être source de dégradation dudit module électrolyseur. Alternativement, le système de refroidissement peut se mettre en route à intervalles réguliers ou être une puissance froide qui s'adapte au point de fonctionnement. A titre d'exemple, l'élévation de la température de fonctionnement d'un module électrolyseur 2 a pour effet d'améliorer son rendement de production d'hydrogène. Un module électrolyseur PEM fonctionnant à 60°C sera environ 10% plus efficace que le même module électrolyseur 2 fonctionnant à 20°C.

La température maximale de fonctionnent peut être présente pour des raisons de sécurité et d'usure. Au-delà de cette température maximale de fonctionnement, le système de refroidissement du module électrolyseur 2 concerné va s'activer afin d'assurer le maintien de sa température en-dessous d'une limite fixée. La mise en route du (ou des) système(s) de refroidissement implique une consommation d'énergie défavorable au système d'électrolyse 1 car cette énergie ne contribue pas à la production d'hydrogène. On comprend donc les avantages de répartir convenablement l'énergie disponible aux modules électrolyseurs choisis en fonction de leurs températures pour optimiser la production de ces derniers. Ainsi, lorsque chaque module électrolyseur est associé à un système de refroidissement, la répartition de la puissance disponible déterminée par l'étape d'alimentation peut être mise en œuvre de telle sorte à empêcher, ou limiter, pour chaque module électrolyseur 2 choisi la mise en route du système de refroidissement associé. La manière de répartir la puissance disponible déterminée sera décrite plus en détails ci-après.

Ainsi, chaque module électrolyseur 2 du système d'électrolyse 1 peut fonctionner de manière indépendante des autres électrolyseurs, et notamment avec des consignes de fonctionnements différentes, en particulier dépendantes de la température dudit module électrolyseur 2.

Il a été évoqué précédemment l'étape de suivi $E_s$ de l'évolution de la puissance disponible permettant de déclencher l'étape d'adaptation du fonctionnement du système d'électrolyse 1. Dans cet exemple particulier, l'étape d'adaptation $E_{ad}$ comporte les étapes E2, E3, E4 et E5. En particulier, lorsque cette étape d'adaptation $E_{ad}$ est terminée (c'est-à-dire après la mise en œuvre de l'étape E5 dans l'exemple), alors le procédé boucle sur l'étape de suivi $E_s$ de l'évolution de la puissance disponible comme l'illustre la figure 2.

De manière générale, chaque module électrolyseur 2 est configuré de sorte à adopter un état actif lorsqu'il est alimenté par ledit système d'alimentation 3 en énergie électrique ou un état inactif lorsqu'il n'est pas alimenté par ledit système d'alimentation 3 en énergie électrique 3. Préférentiellement, l'étape d'alimentation E5 est telle que lorsqu'elle est mise en œuvre, seuls les modules électrolyseurs choisis sont à l'état actif, les autres étant à l'état inactif.

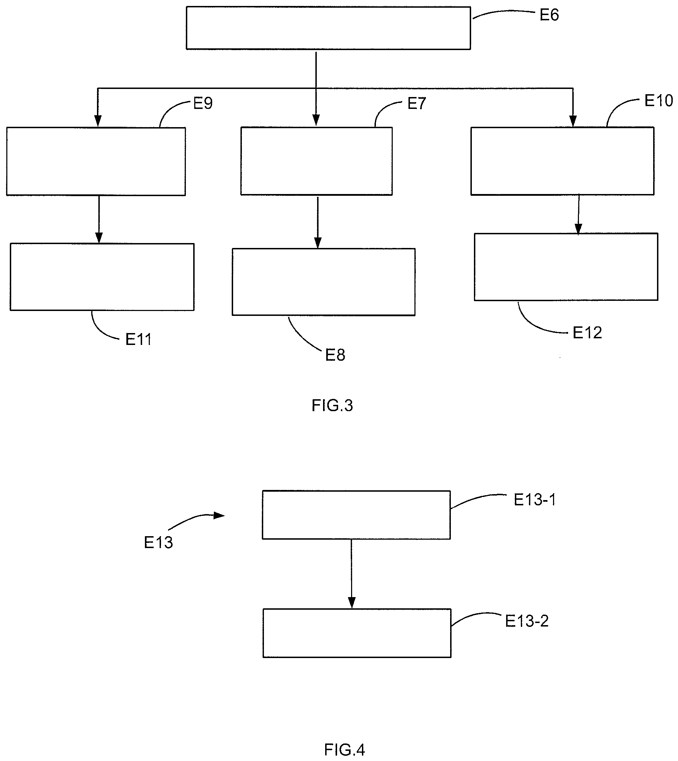

De préférence, l'étape de choix E3 des modules électrolyseurs comprend une étape de détermination E6 (figure 3) d'un nombre courant de modules électrolyseurs 2 actifs. Ce nombre courant est préférentiellement celui au moment où l'étape de choix E2 de modules électrolyseurs est mise en œuvre.

En particulier, comme l'illustre la figure 3, l'étape de détermination E6 du nombre courant de module électrolyseurs 2 actifs permet de participer à la stratégie dans le choix desdits modules électrolyseurs 2 à alimenter électriquement tout en prenant en compte ledit nombre évalué $N_e$.

Dans un premier cas, si ledit nombre courant déterminé de modules électrolyseurs 2 actifs est égal audit nombre évalué $N_e$ (étape E7), alors l'étape de choix E3 consiste à choisir tous les modules électrolyseurs actifs au moment de la mise en œuvre de ladite étape de choix. Autrement dit, les modules électrolyseurs choisis sont tous ceux à l'état actif (étape E8). Dans ce cas, l'étape d'alimentation E5 électrique des modules électrolyseurs consiste à maintenir l'alimentation électrique desdits modules électrolyseurs 2 actifs avec ou sans modification de la répartition de la puissance disponible déterminée.

Selon une mise en œuvre, l'étape de choix E3 des modules électrolyseurs comporte une étape de détermination de températures d'au moins une partie des modules électrolyseurs 2. Les températures déterminées de ladite au moins une partie des modules électrolyseurs 2 vont alors participer au choix desdits modules électrolyseurs 2. Cette mise en œuvre est préférentiellement utilisée dans les cas distincts du premier cas décrit ci-dessus.

En particulier, dans un deuxième cas, le nombre courant déterminé de modules électrolyseurs 2 actifs est supérieur au nombre évalué $N_e$ (étape E9) et, dans un troisième cas, le nombre courant déterminé de modules électrolyseurs 2 actifs est inférieur au nombre évalué $N_e$ (étape E10).

Dans le deuxième cas (étape E9), l'étape E3 de choix des modules électrolyseurs 2 va préférentiellement consister à choisir parmi les modules électrolyseurs 2 déjà actifs uniquement les $N_e$ modules électrolyseurs déjà actifs 2 dont les températures sont les plus élevées. C'est-à-dire que l'on va chercher à désactiver le ou les modules électrolyseurs 2 actifs les plus froids dont le rendement est considéré comme plus faible. Autrement dit, lorsque le nombre courant déterminé de modules électrolyseurs 2 actifs est supérieur au nombre évalué $N_e$, lesdites températures déterminées au cours de ladite étape de choix E3 sont celles des modules électrolyseurs actifs 2 et les modules électrolyseurs 2 choisis par ladite étape de choix E3 correspondent aux $N_e$ modules électrolyseurs 2 actifs dont les températures sont les plus élevées. Dans ce cas, l'étape d'alimentation électrique E5 desdits modules électrolyseurs 2 choisis consiste à alimenter électriquement uniquement lesdits modules électrolyseurs 2 choisis (qui sont alors considérés à l'état actif), les modules électrolyseurs 2 non alimentés sont alors à l'état inactif.

Dans le troisième cas (étape E10), l'étape E3 de choix des modules électrolyseurs 2 à alimenter va préférentiellement consister à choisir tous les modules déjà actifs et à ajouter à ce choix au moins un module électrolyseur 2 à l'état inactif dont la température est la plus élevée des modules électrolyseurs 2 inactif. Autrement dit, lorsque le nombre courant déterminé de modules électrolyseurs 2 actifs est inférieur au nombre évalué $N_e$, lesdites températures déterminées au cours de ladite étape de choix E3 sont celles des modules électrolyseurs 2 inactifs et les modules électrolyseurs 2 choisis par ladite étape de choix E3 correspondent aux modules électrolyseurs 2 actifs plus au moins un module électrolyseur 2 inactif dont la température déterminée au cours de ladite étape de choix E3 est la plus élevée. Dans ce troisième cas, l'étape d'alimentation électrique E5 desdits modules électrolyseurs 2 choisis consiste à alimenter électriquement uniquement lesdits modules électrolyseurs 2 choisis (qui sont alors considérés à l'état actif), les modules électrolyseurs 2 non alimentés sont alors à l'état inactif. Avantageusement, il est choisi parmi les modules électrolyseurs inactifs les $N_e$ moins le nombre courant déterminé modules électrolyseurs les plus chaud. Dans l'éventualité où il faudrait choisir un module électrolyseur 2 inactif en particulier alors qu'au moins deux modules électrolyseurs 2 inactifs seraient susceptibles d'être choisi du fait que leurs températures soient identiques ou similaires, il sera choisi le module électrolyseur 2 dont le temps de fonctionnement total est le plus faible. Par exemple, chaque module électrolyseur 2 peut être associé à un compteur comptant son temps de fonctionnement depuis sa mise en service. Alternativement au temps de fonctionnement, le choix peut être réalisé de manière aléatoire.

Dans un quatrième cas, le système d'électrolyse 1 peut être à l'arrêt et donc tous les modules électrolyseurs placés dans l'état inactif. Dans ce cas, l'étape de choix E3 comporte la détermination de la température de chacun des modules électrolyseurs 2 et seuls les Ne modules électrolyseurs les plus chaud sont choisis.

En vue d'optimiser les ressources, dans les deuxième, troisième et quatrième cas, l'étape de détermination E4 de la température de chacun des modules électrolyseurs choisis peut utiliser tout ou partie des données issues de l'étape de détermination de températures de ladite au moins une partie des modules électrolyseurs 2 mise en œuvre par l'étape de choix E3.

Il a été évoqué ci-dessus les avantages d'une bonne répartition de la puissance disponible déterminée par l'étape d'alimentation E5 au sein des modules électrolyseurs choisis 2. Pour cela, le procédé de pilotage, et notamment l'étape E5, comporte une étape de détermination E13 de ladite répartition de la puissance disponible déterminée pouvant comporter (figure 4), pour chaque module électrolyseur 2 choisi :

- une étape de détermination E13-1 d'un coefficient optimisé théorique de la répartition la puissance disponible déterminée prenant en compte la température mesurée dudit module électrolyseur 2 choisi,

- une étape de détermination E13-2 d'un coefficient réel de répartition à utiliser pour ledit module électrolyseur 2 choisi prenant en compte ledit coefficient optimisé théorique correspondant,

ladite étape de détermination de ladite répartition comportant en outre une étape d'ajustement desdits coefficients réels, notamment dans laquelle l'écart entre chaque coefficient optimisé théorique et le coefficient réel correspondant est minimisé.

Selon un exemple particulier, pour chaque module électrolyseur choisi d'index i (i allant de 1 à $N_e$), le coefficient optimisé théorique $\alpha_i^{optimisé}$ correspondant peut être obtenu selon la formule suivante :

$$\alpha_i^{optimisé} = \exp\left(-\left(\frac{Tmax-Ti}{Tmax-Topti}\right)\right) * \left(\frac{Tmax-Ti}{Tmax-Topti}\right) (1)$$

Avec *Tmax* la température maximum que peut atteindre le module électrolyseur 2 avant déclenchement d'un système de refroidissement dudit module électrolyseur, *Topti* la température optimale de fonctionnement d'un module électrolyseur 2, et *Ti* la température déterminée dudit module électrolyseur 2 correspondant.

*Tmax* peut être de valeur identique pour chacun des modules électrolyseurs.

*Topti* est généralement représentative d'une température inférieure à une température maximale de fonctionnement admise dudit module électrolyseur, et inférieure à la température de démarrage du système de refroidissement. On considère aussi que Topti est supérieure à une température minimum de fonctionnement du module électrolyseur et préférentiellement supérieure à 50°C.

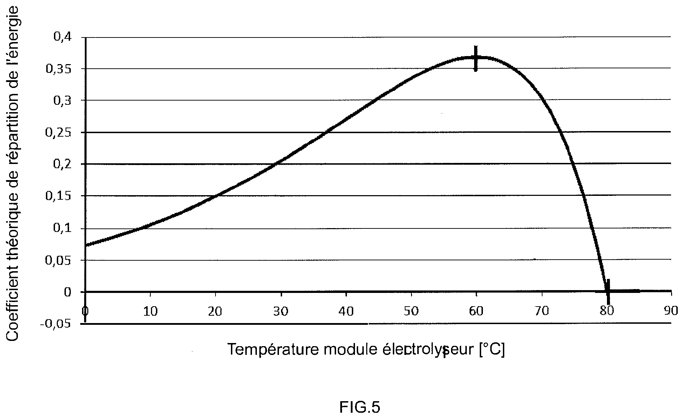

Typiquement, la figure 5 illustre à titre d'exemple la variation du coefficient théorique de répartition en fonction de la température du module électrolyseur en considérant une température optimale de 60°C avec une température où se déclenche le système de refroidissement de 80°C. Plus la valeur du coefficient de répartition de puissance disponible déterminée sera élevée, plus le module électrolyseur sera susceptible d'avoir une consigne élevée de fonctionnement par rapport aux autres modules électrolyseurs (se traduisant par un apport plus conséquent d'énergie audit module électrolyseur concerné).

Ainsi, l'énergie peut être répartie entre les modules électrolyseurs choisis de sorte à avoir une consigne maximale sur les modules électrolyseurs proches d'une température dite optimale de fonctionnement. De cette manière, les modules électrolyseurs les plus froids, qui ont une efficacité moins bonne que les modules électrolyseurs chauds, auront une consigne de fonctionnement plus faible. Pour les modules électrolyseurs dont la température approche de la température de déclenchement du système de refroidissement, ils auront une consigne de plus en plus faible afin d'éviter qu'ils activent leur système de refroidissement qui consommerait de l'énergie pour retirer de la chaleur.

Cette méthode de répartition de la puissance disponible déterminée découlant de l'utilisation de l'équation (1) permet alors de faire tendre progressivement la température de tous les modules électrolyseurs actifs vers la température dite optimale en favorisant le fonctionnement des modules électrolyseurs chauds tout en évitant qu'ils utilisent leur système de refroidissement.

L'étape d'ajustement desdits coefficients réels tient ensuite notamment compte des contraintes suivantes :

- Contrainte sur la répartition de toute l'énergie disponible :

$$\sum \alpha_i^{r\acute{e}el} = 1$$

- Contrainte d'une consigne maximum par module électrolyseur :

$$\alpha_i^{r\acute{e}el} \leq \frac{Puissance\ maximum\ par\ module}{Pdisp}$$

- Consigne minimum par module électrolyseur :

$$\alpha_i^{r\acute{e}el} \geq \frac{Puissance\ minimum\ par\ module}{Ne}$$

Avec *Puissance maximum par module* la puissance maximum que peut recevoir un module électrolyseur et *Puissance minimum par module* la puissance minimale de fonctionnement du module électrolyseur.

La réponse à ces différentes contraintes peut se traduire par la minimisation de l'écart de chacun des coefficients de répartition $\alpha_i^{r\acute{e}el}$ avec le coefficient optimisé théorique $\alpha_i^{optimis\acute{e}}$ correspondant. Cette minimisation peut se traduire par la fonction suivante (minimisation de la somme des écarts) :

$$Minimiser \rightarrow \sum_{i=1}^{Ne} \left( \ \left| \ \alpha_i^{r\acute{e}el} - \ \alpha_i^{optimis\acute{e}} \ \right| \ \right)$$

Autrement dit, la minimisation de l'écart entre chaque coefficient théorique optimisé et le coefficient réel correspondant peut tenir compte des contraintes suivantes : la somme des coefficients réels desdits modules électrolyseurs choisis est égale à 1 ; pour chaque module électrolyseur 2 choisi le coefficient réel correspondant est inférieur ou égal à la puissance maximale dudit module électrolyseur divisée par la puissance disponible déterminée ; pour chaque module électrolyseur 2 choisi le coefficient réel correspondant est supérieur ou égal à une puissance minimale dudit module électrolyseur 2 choisi divisée par le nombre évalué Ne de modules électrolyseurs à utiliser.

Enfin, la répartition de la puissance disponible déterminée au cours de l'étape d'alimentation E5 peut être telle que l'énergie P_alim_mod_i envoyée vers le module électrolyseur actif i correspondant est calculée en multipliant le taux de répartition réel $\alpha_i^{r\acute{e}el}$ avec la puissance en entrée du système d'électrolyse (Pdisp), soit :

$$P\_alim\_mod\_i = Pdisp * \alpha_i^{r\acute{e}el}$$

L'invention est aussi relative à une installation de stockage d'énergie sous la forme d'un produit contenant de l'hydrogène. Cette installation comporte le système d'alimentation 3 en énergie électrique configuré de sorte à exploiter la source d'énergie intermittente, le système d'électrolyse 1 comportant la pluralité de modules électrolyseurs 2 et configuré de sorte à coopérer avec ledit système d'alimentation 3 en énergie électrique, et un module de pilotage 4 (figure 1) comportant les éléments matériels et logiciels de mise en œuvre du procédé de pilotage tel que décrit. On comprend alors que le système d'électrolyse permet de générer le produit, notamment à partir de l'électrolyse de l'eau, de sorte à ce qu'il soit stocké dans un réservoir de l'installation.

Bien entendu, un procédé de fonctionnement d'une installation telle que décrite peut être mis en œuvre. Un tel procédé peut comprendre une étape de génération d'une puissance électrique par le système d'alimentation en énergie électrique, et une étape d'utilisation de la puissance électrique générée par le système d'électrolyse mettant en œuvre le procédé de pilotage tel que décrit. En outre, le procédé peut comporter une étape de stockage de l'hydrogène produit par le système d'électrolyse notamment dans le réservoir de l'installation. L'installation peut en outre être reliée à un réseau électrique et le procédé de fonctionnement peut comporter une étape de détermination d'une puissance électrique demandée par le réseau électrique et une étape de déstockage de l'hydrogène stocké dans le réservoir vers une pile à combustible appartenant à l'installation de sorte à générer la puissance électrique demandée et à l'injecter sur le réseau électrique.

Les points listés ci-après peuvent constituer des variantes de l'invention considérée :

- Le module de pilotage peut piloter plusieurs systèmes d'électrolyse.

- Le ou les systèmes d'électrolyse peuvent être de technologie alcaline ou PEM.
- Le système d'électrolyse peut être connecté au réseau électrique. Dans ce cas une consommation sur le réseau électrique est possible pour alimenter le système d'électrolyse, ceci pouvant notamment être avantageux lorsque le coût d'achat de l'énergie sur le réseau est inférieur au prix de vente constaté de l'énergie produite à partir du produit stocké issu du fonctionnement du système d'électrolyse.

Il résulte de tout ce qui a été dit ci-avant les bénéfices suivants attribuables à la mise en œuvre de l'invention :

- Favoriser l'utilisation des modules électrolyseurs chauds qui auront un meilleur rendement de production.
- Limiter la mise en route du système de refroidissement (consommation supplémentaire d'énergie) sur les modules électrolyseurs proche de la température maximum de fonctionnement.
- Homogénéiser la température des modules électrolyseurs vers la température optimale de fonctionnement.
- Participer à la limitation de température des modules électrolyseurs pour éviter leur dégradation prématurée.
- Améliorer le rendement global de production du système d'électrolyse (diminution de la consommation des auxiliaires et augmentation de l'efficacité des modules électrolyseurs).

**Revendications**

1. Procédé de pilotage d'un système d'électrolyse (1) comprenant une pluralité de modules électrolyseurs (2) qui sont tous fonctionnels, c'est-à-dire aptes à passer dans un état actif, et destiné à coopérer avec un système d'alimentation en énergie électrique (3) exploitant une source d'énergie intermittente, ledit procédé comprenant :

   - une étape de détermination (E1) d'une puissance électrique disponible que peut fournir ledit système d'alimentation en énergie électrique (3),
   - une étape d'évaluation (E2) d'un nombre $N_e$ adapté de modules électrolyseurs (2) à utiliser en fonction de la puissance électrique disponible déterminée,
   - une étape de choix (E3) de modules électrolyseurs (2) à alimenter électriquement parmi les modules électrolyseurs fonctionnels de la pluralité de modules électrolyseurs du système d'électrolyse prenant en compte ledit nombre évalué $N_e$, ledit nombre évalué $N_e$ étant strictement inférieur au nombre total de modules électrolyseurs fonctionnels du système d'électrolyse,
   - une étape de détermination (E4) de la température de chacun des modules électrolyseurs choisis,
   - une étape d'alimentation (E5) électrique des modules électrolyseurs (2) choisis par ledit système d'alimentation en énergie électrique (3) selon une répartition de la puissance électrique disponible déterminée dépendante des températures déterminées (E4) de chacun des modules électrolyseurs (2) choisis,
   le procédé étant **caractérisé en ce que** chaque module électrolyseur (2) étant configuré de sorte à adopter un état actif lorsqu'il est alimenté par ledit système d'alimentation en énergie électrique (3) ou un état inactif lorsqu'il n'est pas alimenté par ledit système d'alimentation en énergie électrique (3), ladite étape de choix (E3) des modules électrolyseurs (2) comprend une étape de détermination (E6) d'un nombre courant de modules électrolyseurs actifs,
   et **en ce que** l'étape de choix (E3) des modules électrolyseurs (2) comporte une étape de détermination de températures d'au moins une partie des modules électrolyseurs (2).

2. Procédé selon la revendication précédente, **caractérisé en ce que** ledit nombre courant déterminé de modules électrolyseurs (2) actifs étant égal audit nombre évalué $N_e$, alors l'étape de choix (E3) consiste à choisir tous les modules électrolyseurs (2) actifs.

3. Procédé selon la revendication 1, **caractérisé en ce que** le nombre courant déterminé de modules électrolyseurs (2) actifs étant supérieur au nombre évalué $N_e$, lesdites températures déterminées au cours de ladite étape de choix (E3) sont celles des modules électrolyseurs actifs (2) et les modules électrolyseurs choisis par ladite étape de choix (E3) correspondent aux $N_e$ modules électrolyseurs (2) actifs dont les températures sont les plus élevées, et **en ce que** l'étape d'alimentation électrique (E5) desdits modules électrolyseurs (2) choisis consiste à alimenter électriquement uniquement lesdits modules électrolyseurs (2) choisis.

4. Procédé selon la revendication 1, **caractérisé en ce que** le nombre courant déterminé de modules électrolyseurs (2) actifs étant inférieur au nombre évalué $N_e$, lesdites températures déterminées au cours de ladite étape de choix (E3) sont celles des modules électrolyseurs (2) inactifs et les modules électrolyseurs (2) choisis par ladite étape de choix (E3) correspondent aux modules électrolyseurs (2) actifs plus au moins un module électrolyseur (2) inactif dont la température déterminée au cours de ladite étape de choix (E3) est la plus élevée, et **en ce que** l'étape d'alimentation électrique (E5) desdits modules électrolyseurs (2) choisis consiste à alimenter électriquement uniquement lesdits modules électrolyseurs (2) choisis.

5. Procédé selon l'une quelconque des revendications précédentes, **caractérisé en ce que** l'étape d'évaluation dudit nombre adapté $N_e$ de modules électrolyseurs à utiliser est calculé à partir de l'équation suivante :

$$NB_{ENTIER}\left(\frac{Pdisp}{Pmax\_module}\right) + 1$$ avec $P_{disp}$ la puissance électrique disponible déterminée, $P_{max\_module}$ la puissance maximum que peut recevoir chaque module électrolyseur (2), et $NB_{ENTIER}$ la fonction donnant une valeur entière du rapport $\dfrac{Pdisp}{Pmax\_module}$ .

6. Procédé selon l'une quelconque des revendications précédentes, **caractérisé en ce qu'**il comporte une étape de détermination (E13) de ladite répartition de la puissance disponible déterminée comportant, pour chaque module électrolyseur (2) choisi :

   - une étape de détermination (E13-1) d'un coefficient optimisé théorique de répartition de la puissance disponible déterminée prenant en compte la température mesurée dudit module électrolyseur (2) choisi,
   - une étape de détermination (E13-2) d'un coefficient réel de répartition à utiliser pour ledit module électrolyseur (2) choisi prenant en compte ledit coefficient optimisé théorique correspondant,

   ladite étape de détermination de ladite répartition comportant en outre une étape d'ajustement desdits coefficients réels, notamment dans laquelle l'écart entre chaque coefficient optimisé théorique et le coefficient réel correspondant est minimisé.

7. Procédé selon la revendication précédente, **caractérisé en ce que** la minimisation de l'écart entre chaque coefficient théorique optimisé et le coefficient réel correspondant tient compte des contraintes suivantes :

   - la somme des coefficients réels desdits modules électrolyseurs (2) choisis est égale à 1,
   - pour chaque module électrolyseur (2) choisi le coefficient réel correspondant est inférieur ou égal à la puissance maximale dudit module électrolyseur (2) choisi divisée par la puissance disponible déterminée,
   - pour chaque module électrolyseur (2) choisi le coefficient réel correspondant est supérieur ou égal à une puissance minimale dudit module électrolyseur (2) choisi divisée par le nombre évalué Ne.

8. Installation de stockage d'énergie sous la forme d'un produit contenant de l'hydrogène comprenant :

   - un système d'alimentation en énergie électrique (3) configuré de sorte à exploiter une source d'énergie intermittente,
   - un système d'électrolyse (1) comprenant une pluralité de modules électrolyseurs (2) et configuré de sorte à coopérer avec ledit système d'alimentation en énergie électrique (3),
   - un module de pilotage (4) de l'installation comportant les éléments matériels et logiciels de mise en œuvre du procédé selon l'une quelconque des revendications 1 à 7.

**Patentansprüche**

1. Verfahren zum Steuern eines Elektrolysesystems (1), das mehrere Elektrolyseurmodule (2) umfasst, die alle funktionell sind, d. h. in einen aktiven Zustand übergehen können, und dazu vorgesehen ist, mit einem System (3) zur Versorgung mit elektrischer Energie zusammenzuwirken, das eine intermittierende Energiequelle nutzt, wobei das Verfahren Folgendes umfasst:

   - einen Schritt des Bestimmens (E1) einer verfügbaren elektrischen Leistung, die das System (3) zur Versorgung mit elektrischer Energie versorgen kann,
   - einen Schritt des Ermittelns (E2) einer geeigneten Zahl $N_e$ von Elektrolyseurmodulen (2), die in Abhängigkeit von der bestimmten verfügbaren elektrischen Leistung zu verwenden sind,
   - einen Schritt des Auswählens (E3) von elektrisch zu versorgenden Elektrolyseurmodulen (2) aus den funktionellen Elektrolyseurmodulen der mehreren Elektrolyseurmodule des Elektrolysesystems unter Berücksich-

tigung der ermittelten Zahl $N_e$, wobei die ermittelte Zahl $N_e$ grundsätzlich kleiner als die Gesamtzahl der funktionellen Elektrolyseurmodule des Elektrolysesystems ist,
- einen Schritt des Bestimmens (E4) der Temperatur eines jeden der ausgewählten Elektrolyseurmodule,
- einen Schritt der Stromversorgung (E5) der ausgewählten Elektrolyseurmodule (2) durch das System (3) zur Versorgung mit elektrischer Energie gemäß einer Verteilung der bestimmten verfügbaren elektrischen Leistung in Abhängigkeit von den bestimmten (E4) Temperaturen eines jeden der ausgewählten Elektrolyseurmodule (2), wobei das Verfahren **dadurch gekennzeichnet ist, dass** jedes Elektrolyseurmodul (2) so konfiguriert ist, dass es einen aktiven Zustand annimmt, wenn es vom System (3) zur Versorgung mit elektrischer Energie versorgt wird, oder einen inaktiven Zustand annimmt, wenn es vom System (3) zur Versorgung mit elektrischer Energie nicht versorgt wird, wobei der Schritt des Auswählens (E3) von Elektrolyseurmodulen (2) einen Schritt des Bestimmens (E6) einer gegenwärtigen Zahl von aktiven Elektrolyseurmodulen umfasst,
und dadurch, dass der Schritt des Auswählens (E3) von Elektrolyseurmodulen (2) einen Schritt des Bestimmens von Temperaturen zumindest eines Teils der Elektrolyseurmodule (2) umfasst.

2. Verfahren nach dem vorhergehenden Anspruch, **dadurch gekennzeichnet, dass**, wenn die bestimmte gegenwärtige Zahl von aktiven Elektrolyseurmodulen (2) gleich der ermittelten Zahl $N_e$ ist, der Schritt des Auswählens (E3) darin besteht, alle aktiven Elektrolyseurmodule (2) auszuwählen.

3. Verfahren nach Anspruch 1, **dadurch gekennzeichnet, dass** die bestimmte gegenwärtige Zahl von aktiven Elektrolyseurmodulen (2) größer als die ermittelte Zahl $N_e$ ist, die beim Schritt des Auswählens (E3) bestimmten Temperaturen diejenigen der aktiven Elektrolyseurmodule (2) sind und die durch den Schritt des Auswählens (E3) ausgewählten Elektrolyseurmodule $N_e$ aktiven Elektrolyseurmodulen (2) entsprechen, deren Temperaturen am höchsten sind, und dadurch, dass der Schritt der Stromversorgung (E5) der ausgewählten Elektrolyseurmodule (2) darin besteht, nur die ausgewählten Elektrolyseurmodule (2) elektrisch zu versorgen.

4. Verfahren nach Anspruch 1, **dadurch gekennzeichnet, dass** die bestimmte gegenwärtige Zahl von aktiven Elektrolyseurmodulen (2) kleiner als die ermittelte Zahl $N_e$ ist, die beim Schritt des Auswählens (E3) bestimmten Temperaturen diejenigen der inaktiven Elektrolyseurmodule (2) sind und die durch den Schritt des Auswählens (E3) ausgewählten Elektrolyseurmodule (2) den aktiven Elektrolyseurmodulen (2) plus mindestens einem inaktiven Elektrolyseurmodul (2), dessen beim Schritt des Auswählens (E3) bestimmte Temperatur am höchsten ist, entsprechen, und dadurch, dass der Schritt der Stromversorgung (E5) der ausgewählten Elektrolyseurmodule (2) darin besteht, nur die ausgewählten Elektrolyseurmodule (2) elektrisch zu versorgen.

5. Verfahren nach einem der vorhergehenden Ansprüche, **dadurch gekennzeichnet, dass** der Schritt des Ermittelns der geeigneten Zahl $N_e$ von zu verwendenden Elektrolyseurmodulen mittels der folgenden Gleichung berechnet wird:

$$NB_{GESAMT}\left(\frac{P_{verfügbar}}{P_{max\_Modul}}\right) + 1$$, wobei $P_{verfügbar}$ die bestimmte verfügbare elektrische Leistung ist, $P_{max\_Modul}$

die maximale Leistung ist, die jedes Elektrolyseurmodul (2) aufnehmen kann, und $NB_{GESAMT}$ die Funktion ist, die einen ganzzahligen Wert des Verhältnisses $\frac{P_{verfügbar}}{P_{max\_Modul}}$ ergibt.

6. Verfahren nach einem der vorhergehenden Ansprüche, **dadurch gekennzeichnet, dass** es einen Schritt des Bestimmens (E13) der Verteilung der bestimmten verfügbaren Leistung umfasst, der für jedes ausgewählte Elektrolyseurmodul (2) Folgendes umfasst:

- einen Schritt des Bestimmens (E13-1) eines optimierten Soll-Koeffizienten der Verteilung der bestimmten verfügbaren Leistung unter Berücksichtigung der gemessenen Temperatur des ausgewählten Elektrolyseurmoduls (2),
- einen Schritt des Bestimmens (E13-2) eines Ist-Verteilungskoeffizienten, der für das gewählte Elektrolyseurmodul (2) unter Berücksichtigung des entsprechenden optimierten Soll-Koeffizienten zu verwenden ist,

wobei der Schritt des Bestimmens der Verteilung außerdem einen Schritt des Einstellens der Ist-Koeffizienten umfasst, wobei insbesondere die Abweichung zwischen jedem optimierten Soll-Koeffizienten und dem entsprechenden Ist-Koeffizienten minimiert wird.

7. Verfahren nach dem vorhergehenden Anspruch, **dadurch gekennzeichnet, dass** bei der Minimierung der Abweichung zwischen jedem optimierten Soll-Koeffizienten und dem entsprechenden Ist-Koeffizienten die folgenden Einschränkungen berücksichtigt werden:

- die Summe der Ist-Koeffizienten der ausgewählten Elektrolyseurmodule (2) ist gleich 1,
- für jedes ausgewählte Elektrolyseurmodul (2) ist der entsprechende Ist-Koeffizient kleiner als oder gleich der maximalen Leistung des ausgewählten Elektrolyseurmoduls (2) dividiert durch die bestimmte verfügbare Leistung,
- für jedes ausgewählte Elektrolyseurmodul (2) ist der entsprechende Ist-Koeffizient größer als oder gleich einer minimalen Leistung des ausgewählten Elektrolyseurmoduls (2) dividiert durch die bestimmte Zahl $N_e$.

8. Vorrichtung zur Speicherung von Energie in Form eines Wasserstoff enthaltenden Produkts, die Folgendes umfasst:

- ein System (3) zur Versorgung mit elektrischer Energie, das so konfiguriert ist, dass es eine intermittierende Energiequelle nutzt,
- ein Elektrolysesystem (1), das mehrere Elektrolyseurmodule (2) umfasst und so konfiguriert ist, dass es mit dem System (3) zur Versorgung mit elektrischer Energie zusammenwirkt,
- ein Modul (4) zum Steuern der Vorrichtung, das die Hard- und Softwareelemente zur Durchführung des Verfahrens nach einem der Ansprüche 1 bis 7 umfasst.

**Claims**

1. Method for controlling an electrolysis system (1) which comprises a plurality of electrolyser modules (2) and is designed to cooperate with an electric energy supply system (3) which uses an intermittent energy source, said method comprising:

- a step (E1) of determination of an available electric power which said electric energy supply system (3) can provide;
- a step (E2) of evaluation of a suitable number $N_e$ of electrolyser modules (2) to be used according to the determined available electric power;
- a step (E3) of selection of electrolyser modules (2) to be supplied electrically among the electrolyser modules of the plurality of electrolyser modules of the electrolysis system that are functional, taking into account said evaluated number $N_e$, said evaluated number $N_e$ being strictly lower than the total number of functional electrolyser modules of the electrolysis system;
- a step (E4) of determination of the temperature of each of the selected electrolyser modules;
- a step (E5) of electric supply of the electrolyser modules (2) selected by said electric energy supply system (3) according to a distribution of the available electric power determined depending on the determined temperatures (E4) of each of the selected electrolyser modules (2),
the method being **characterised in that**, with each electrolyser module (2) being configured such as to adopt an active state when it is supplied by said electric energy supply system (3), or an inactive state when it is not supplied by said electric energy supply system (3), said step (E3) of selection of the electrolyser modules (2) comprises a step (E6) of determination of a current number of active electrolyser modules,
and **in that** the step (E3) of selection of the electrolyser modules (2) comprises a step of determination of temperatures of at least some of the electrolyser modules (2).

2. Method according to the preceding claim, **characterised in that**, when said determined current number of active electrolyser modules (2) is equal to said evaluated number $N_e$, then the selection step (E3) consists in selecting all the active electrolyser modules (2).

3. Method according to claim 1, **characterised in that**, with the determined current number of active electrolyser modules (2) being greater than the evaluated number $N_e$, said temperatures determined during said selection step (E3) are those of the active electrolyser modules (2), and the electrolyser modules selected by said selection step (E3) correspond to the $N_e$ active electrolyser modules (2) with the highest temperatures, and **in that** the step (E5) of electric supply of said selected electrolyser modules (2) consists in supplying electrically only said selected electrolyser modules (2).

4. Method according to claim 1, **characterised in that**, with the determined current number of active electrolyser modules (2) being lower than the evaluated number $N_e$, said temperatures determined during said selection step (E3) are those of the inactive electrolyser modules (2), and the electrolyser modules (2) selected by said selection step (E3) correspond to the active electrolyser modules (2) plus at least one inactive electrolyser module (2), the temperature of which determined during said selection step (E3) is the highest, and **in that** the step (E5) of electric supply of said selected electrolyser modules (2) consists in supplying electrically only said selected electrolyser modules (2).

5. Method according to any one of the preceding claims, **characterised in that** the step of evaluation of said suitable number $N_e$ of electrolyser modules to be used is calculated from the following equation: $NB_{ENTIER(\frac{Pdisp}{Pmax\_module})} + 1$ where $P_{disp}$ is the determined available electric power, $P_{max\_module}$ is the maximum power which each electrolyser module (2) can receive, and $NB_{ENTIER}$ is the function which provides a whole value of the ratio $\frac{Pdisp}{Pmax\_module}$.

6. Method according to any one of the preceding claims, **characterised in that** it comprises a step (E13) of determination of said distribution of the determined available power, comprising, for each selected electrolyser module (2):

   - a step (E13-1) of determination of a theoretical optimised coefficient of distribution of the determined available power, taking into account the measured temperature of said selected electrolyser module (2);
   - a step (E13-2) of determination of a real coefficient of distribution to be used for said selected electrolyser module (2), taking into account said corresponding theoretical optimised coefficient;

   said step of determination of said distribution additionally comprising a step of adjustment of said real coefficients, in particular in which the difference between each theoretical optimised coefficient and the corresponding real coefficient is minimised.

7. Method according to the preceding claim, **characterised in that** the minimisation of the difference between each optimised theoretical coefficient and the corresponding real coefficient takes into account the following constraints:

   - the sum of the real coefficients of said selected electrolyser modules (2) is equal to 1;
   - for each selected electrolyser module (2), the corresponding real coefficient is less than, or equal to, the maximum power of said selected electrolyser module (2) divided by the determined available power;
   - for each selected electrolyser module (2), the corresponding real coefficient is higher than, or equal to, a minimum power of said selected electrolyser module (2) divided by the evaluated number $N_e$.

8. Energy storage installation in the form of a product containing hydrogen, comprising:

   - an electric energy supply system (3) configured such as to exploit an intermittent energy source;
   - an electrolysis system (1) comprising a plurality of electrolyser modules (2), and configured such as to cooperate with said electric energy supply system (3);
   - a module (4) to control the installation, comprising the hardware and software elements for implementation of the method according to any one of claims 1 to 7.

FIG.1

FIG.2

E6

E9　　　　E7　　　　E10

E11

E8

E12

FIG.3

E13-1

E13

E13-2

FIG.4

FIG.5

**RÉFÉRENCES CITÉES DANS LA DESCRIPTION**

**Documents brevets cités dans la description**

- WO 2010048706 A